# EUROPEAN PATENT APPLICATION

(11) **EP 1 028 540 A2**
(43) Date of publication of application: **16.08.2000**
(21) Application number: 00102621.0
(22) Date of filing: 08.02.2000
(51) Int. Cl.: H04B 1/707

(54) **Spread spectrum receiver having despreaders commonly shared among rake combiners**

(30) Priority: 08.02.1999 JP 3044899
(71) Applicant: NEC CORPORATION, Tokyo (JP)
(72) Inventor: Unno, Yoshihiro, Minato-ku, Tokyo (JP)
(74) Representative: Glawe, Delfs, Moll & Partner

(57) **Abstract**

A spread spectrum receiver includes multiple despreaders multiple RAKE combiners associated respectively with spread spectrum signals. Allocation circuitry detects one or more multipath components of received spread spectrum signals respectively addressed to multiple users, and configures the despreaders into a number of groups of despreaders such that the groups correspond to the received spread spectrum signals and each group has one or more despreaders corresponding to the detected one or more multipath components of the received spread spectrum signal, and allocates the despreaders of each group to the corresponding RAKE combiner. All despreaders are provided in number that is smaller than the number of the RAKE combiners times a maximum number of possible multipath components of a spread spectrum signal and greater than the number of the RAKE combiners.

## Description

### BACKGROUND OF THE INVENTION

### Field of the Invention

The present invention relates generally to spread spectrum receivers, and more specifically to a spread spectrum receiver where multiple RAKE combiners are provided for multiple users.

### Description of the Related Art

In a multipath environment, a transmitted radio signal is reflected off objects, causing radio waves of multipath reflections to arrive on a receive site at different times depending on the lengths of the propagation paths. In CDMA (code division multiple access) cellular communication networks, more than one cell-site transmitter uses the same PN code for modulating a signal and transmit the spread spectrum signal simultaneously on the same carrier frequency. As a result, a mobile site is able to take advantage of the characteristic of the PN modulation by despreading a received signal with mutually delayed PN codes of the same sequence and maximal-ratio combining the despread multipath signals using what is known as a RAKE combiner to produce a high level signal. It is therefore desirable to provide RAKE combining as many component signals as there are propagation paths for a received spread spectrum signal. However, it is known that the number of propagation paths a single spread spectrum signal may take varies significantly depending on the particular multipath environment of the signal.

A known multi-user spread spectrum RAKE receiver is comprised of a plurality of despreaders and a plurality of RAKE combiners. These RAKE combiners are provided in a one-to-one correspondence to multiple users. Because of the presence of multipath components in a received spread spectrum signal, a fixed number of despreaders are provided for each user. Usually, five to 10 despreaders are provided for each user. Since the number of such multipath components is determined by the number (J) of cell-site transmitters which a single receiver can detect, a total number (J x M) of despreaders is required for a multi-user receiver, where M is the number of its users.

Since the number of multipath components varies significantly from one spread spectrum signal to another, improvement in RAKE combining performance can no longer be expected if the number of actual multipath components is smaller than the number of despreaders.

Therefore, a need exists for a multi-user spread spectrum RAKE receiver to reduce the number of its despreaders.

### SUMMARY OF THE INVENTION

It is therefore an object of the present invention to provide a spread spectrum receiver having a reduced number of despreaders.

This object is obtained by sharing a plurality of despreaders among multiple RAKE combiners.

According to the present invention, there is provided a spread spectrum receiver comprising a plurality of despreaders and a plurality of RAKE combiners associated respectively with multiple users to which a plurality of spread spectrum signals are transmitted respectively. Allocation circuitry is provided for detecting one or more multipath components of received spread spectrum signals and allocating the despreaders to the RAKE combiners according to the detected one or more multipath components. All despreaders are provided in number that is smaller than the number of the RAKE combiners times a maximum number of possible multipath components of each spread spectrum signal and greater than the number of said RAKE combiners.

In a specific aspect, the allocation circuitry is arranged to configure the plurality of despreaders into a plurality of groups corresponding to received spread spectrum signals, with each group having one or more despreaders corresponding to the detected one or more multipath components of each of the received spread spectrum signals, and allocate the despreaders of each group to a corresponding one of the RAKE combiners.

### BRIEF DESCRIPTION OF THE DRAWINGS

The present invention will be described in further detail with reference to the accompanying drawings, in which:
Fig. 1 is a block diagram of a multi-user spread spectrum receiver for receiving spread spectrum signal according to a first embodiment of the present invention;
Fig. 2 is a flowchart of the operation of the control processor of Fig. 1;
Fig. 3 is a block diagram of a multi-user spread spectrum receiver according to a second embodiment of the present invention;
Fig. 4 is a block diagram of a multi-user spread spectrum receiver according to a third embodiment of the present invention; and
Fig. 5 is a block diagram showing details of the diversity controller of Fig. 4.

### DETAILED DESCRIPTION

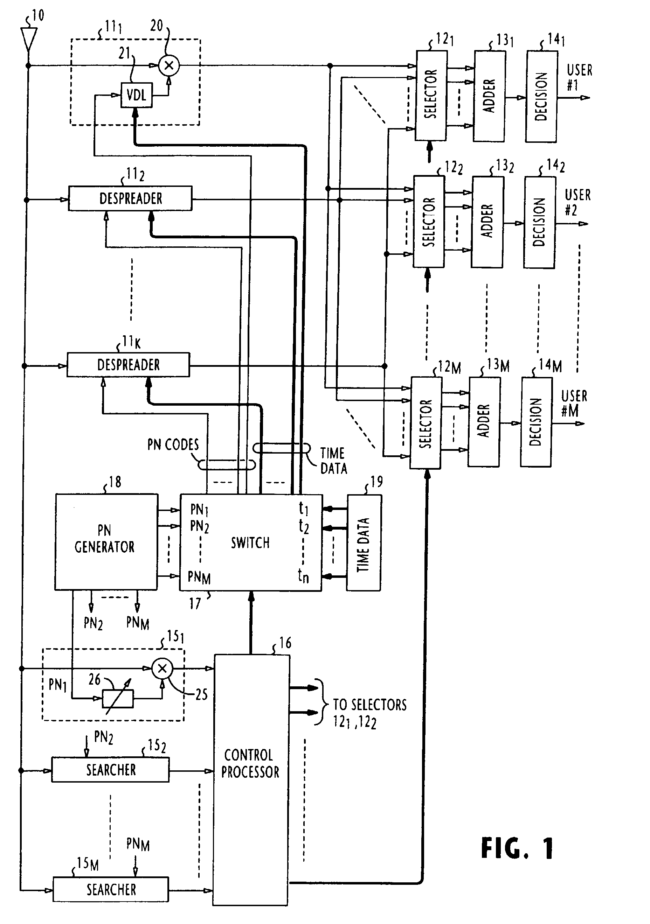

Referring now to Fig. 1, there is shown a multi-user CDMA (code division multiple access) RAKE receiver of the present invention for receiving a number of spread spectrum signals respectively destined for M users. The spread spectrum signals directed to the multiple users of the spread spectrum receiver are transmitted from one or more sources such as cell-site base transmitters.

Because of varying land features and terrain, a transmitted signal propagates over a plurality of paths of different (lengths) propagation delay times, or multipath fading channels. For a given spread spectrum signal, there may be as many multipath channels as there are cell-site transmitters or only one propagation path, depending on the multipath environment of the spread spectrum signal.

In the first embodiment of the present invention, only one antenna 10 is used for the multi-user spread spectrum receiver. The spread spectrum receiver includes a plurality of despreaders 11₁ through 11_{K}, all of which are connected to the antenna 10 to receive spread spectrum signals destined for the users of the receiver. Each despreader includes a correlator 20 and a variable delay element 21 to produce a despread signal.

The correlator 20 of each despreader is supplied with a pseudonoise (PN) code sequence via the variable delay element 21 for correlating the spread spectrum signals from antenna 10 with the PN code sequence. In order to timing the PN code sequence with a multipath component signal, the variable delay element 21 is supplied with an externally supplied delay time value determined by the length of a particular multipath fading channel. Thus, there is at least one delay time value for each PN code sequence depending on multipath environment of each transmitted spread spectrum signal.

Selectors 12₁ ∼ 12_{M} are provided respectively for M users, each selector having K input terminals connected to the outputs of despreaders 11₁ ∼ 11_{K} respectively and J output terminals, where J is the number of cell-site transmitters, or a maximum number of multipath fading channels of each user signal. RAKE combiners, or adders 13₁ ∼ 13_{M} are associated with the selectors 12₁ ∼ 12_{M}, respectively. Each adder 13 has J input terminals connected to the outputs of the associated selector 12 to combine output signals from an allocated group of despreaders whose number varies depending on the number of paths over which the spread spectrum signal of the associated user is actually propagated.

Specifically, in each adder 13, the selected multipath signals are weighted by optimum coefficients and maximal-ratio combined to produce a high level output in a manner known in the art. Note that the integer K is greater than M and smaller than J x M. The multiple users are assigned pseudonoise codes PN₁ ∼ PN_{M,} respectively.

Depending on the multipath environment of a transmitted spread spectrum signal, all despreaders 11 are configured into a plurality of groups corresponding in number to the multiple users, or RAKE combiners 13₁ ∼ 13_{M}. However, the number of despreaders in each group may differ from each other depending on the number of multipath components of the corresponding spread spectrum signal (i.e., multiple propagation paths the spread spectrum signal take during transmission).

According to the configured groups of despreaders, the selectors 12 are controlled to establish one or more connections between its K input terminals and its J output terminals so that each selector 12 supplies the output signals from a group of despreaders to the associated adder 13, where the multipath components of the corresponding spread spectrum signal are RAKE combined. The output of each adder 13 is supplied to one of decision devices 14₁ ∼ 14_{M} that is connected to the associated user, where the RAKE combined signal is compared to a decision threshold to produce a demodulated signal for the associated user.

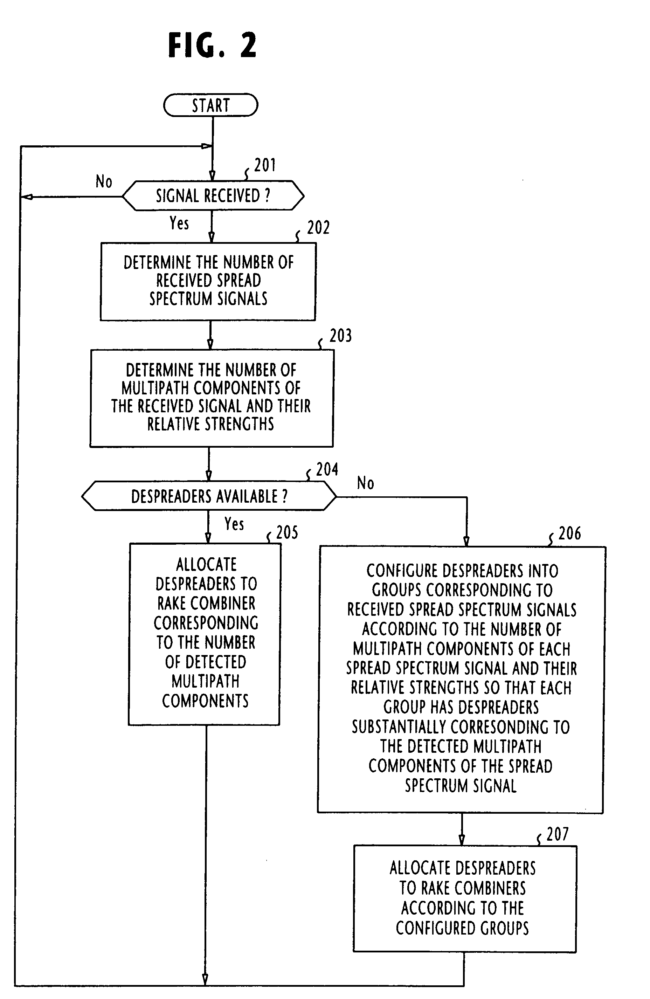

In more detail, the operation of the control processor proceeds as shown in the flowchart of Fig. 2.

If a spread spectrum signal is received (step 201), the processor determines the number of all received spread spectrum signals including the currently received signal (step 202) and determines the number of multipath components of the currently received spread spectrum signal from the outputs of searchers 15 (step 203). At step 204, the control processor checks to see if despreaders are available for allocation to the RAKE combiner corresponding to the currently received spread spectrum signal.

If the decision at step 204 is affirmative, flow proceeds to step 205 to allocate despreaders to that RAKE combiner corresponding to the detected multipath components of the spread spectrum signal. The control processor returns to the starting point of the routine.

If the decision at step 204 is negative, flow proceeds to step 206 to configure all despreaders into a plurality of groups corresponding to the received spread spectrum signals according to the number of multipath components of each received spread spectrum signal and the relative strengths of the multipath components, so that each group has one or more despreaders substantially corresponding to the detected multipath components of the spread spectrum signal.

At step 207, the control processor allocates despreaders to the RAKE combiners according to the configured groups, and returns to the starting point of the routine.

All despreaders 11 are therefore efficiently utilized to be commonly shared by M users. The number of despreaders allocated to each user varies from time to time depending on multipath fading environment of the propagation path. Therefore, a despreader allocated to a particular user at a given instant of time may be reallocated to another user at the next instant.

The allocation of despreaders and delay time values is performed by a plurality of searchers 15₁ ∼ 15_{M}, a control processor 16, a switch 17, a PN code generator 18 and a time data memory 19, with the aid of the selectors 12₁ ∼ 12_{M}.

Searchers 15 are provided in number corresponding to the M users. Each searcher includes a correlator 25, and a variable delay element 26 which introduces a constantly varying delay time to the PN code of the associated user supplied from the PN code generator 18. This delay time is cyclically swept across a range of delay time values in order to search for multipath components. The spread spectrum signals from antenna 10 are despread with each user's PN code of constantly varying phase and one or more significant peaks will be detected when the varying phase coincides with multipath signal components.

According to the output signals from searchers 15₁ ∼ 15_{M}, the control processor 16 determines, for each of the M users, the number of despreaders to be allocated and one or more delay data values to be supplied to the allocated despreaders. More specifically, the control processor 16 detects one or more significant multipath component signals that appear in time sequence at the output of each searcher 15ᵢ (where i = 1, 2 ....., M) and configures all despreaders into a plurality of M groups corresponding respectively to the users, with the number of despreaders in each group corresponding to the number of multipath components of the spread spectrum signal of the corresponding user. Control processor 16 further determines the respective delay time values for the despreaders of each group according to the time positions of the signals in the detected propagation paths.

At a predetermined chip rate, the pseudonoise generator 18 produces a plurality of different pseudonoise code sequences PN₁ through PN_{M} corresponding respectively to the multiple users and supplies these PN codes respectively to the searchers 15 and to the switch 17. Time data memory 19 provides delay time values t₁ ∼ tₙ to the switch 17. In accordance with control signals from the processor 16, the switch 17 establishes connections to the despreaders from the PN generator 18 and the time data memory 19 so that the despreaders of each group are supplied with the PN code of the associated user and delay time values.

Despreaders allocated to each user are therefore supplied with the user's PN code and respectively loaded with different delay time values corresponding to the propagation paths of the spread spectrum signal destined for the user. As the searcher associated with the user continues to search for multipath component signals of significant levels, the switch 17 may be reconfigured according to varying propagation paths and their varying path lengths so that despreaders previously assigned to one user are reassigned to another user.

It is seen therefore that the present invention achieves a savings of despreaders. If the maximum number of multipath channels for each user signal (usually determined by the number of accessible cell-site transmitters) is denoted as J and the average number of multipath channels allocated to each user is denoted as A, the RAKE receiver of this invention achieves a J-to-A savings of despreaders and associated circuits.

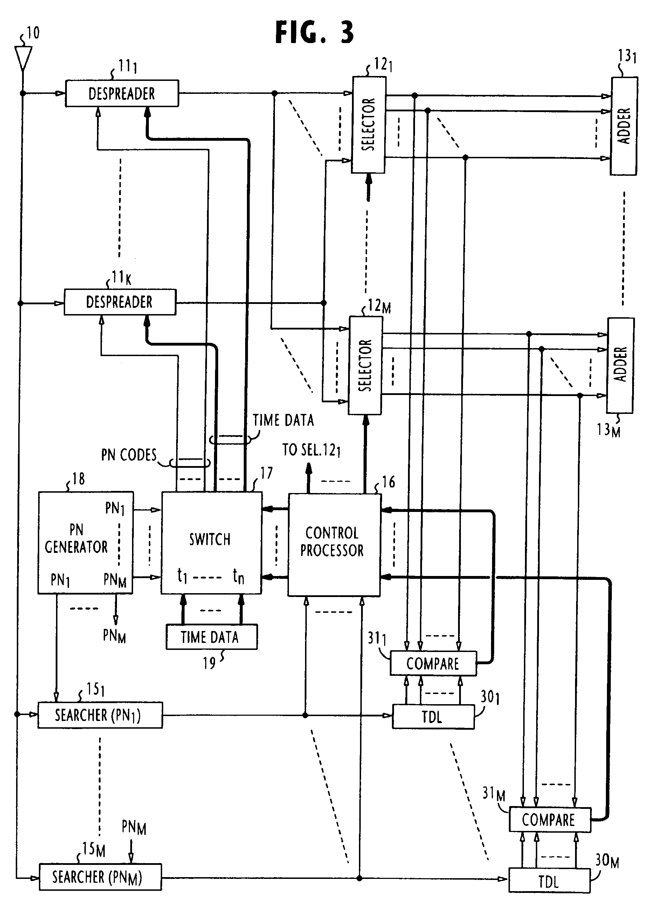

Fig. 3 is a block diagram of a second embodiment of the present invention. In this embodiment, the time-serial outputs of searchers 15₁ ∼ 15_{M} are converted to parallel signals in respective tapped delay lines 31₁ ∼ 30_{M} and compared in comparators 31₁∼ 31_{M} with the parallel outputs of adders 12₁ ∼ 12_{M}. The output of each comparator 31 represents the timing differences of the actually recovered multipath signals from the multipath signals detected by the corresponding searcher 15. The output of each comparator 31 is supplied to the control processor 16 as a feedback signal. Control processor 16 uses the feedback signals from the comparators 31 to reconfigure the switch 17. Precision feedback control is therefore achieved.

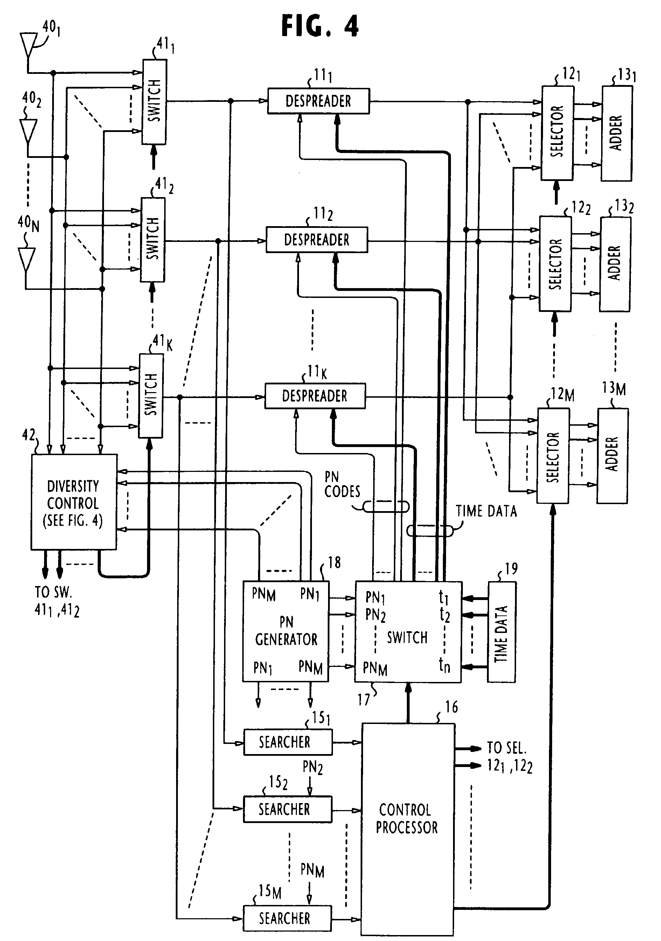

Fig. 4 shows a further embodiment of the present invention in which a number of diversity antennas 40₁ ∼40_{N} are used, instead of the single antenna 10. Antenna switches 41₁ ∼41_{K} are associated respectively with despreaders 11₁ ∼ 11_{K}. Each of the antenna switches 41 has N input terminals respectively connected to the antennas 40₁ ∼ 40_{N} and a single output terminal connected to the input of the associated despreader. A diversity controller 42 receives all signals detected by the antennas 40₁ ∼ 40_{N} and the users' PN code sequences PN₁ ∼ PN_{M} from PN generator 18 to control the switches 41₁ ∼ 41_{K}.

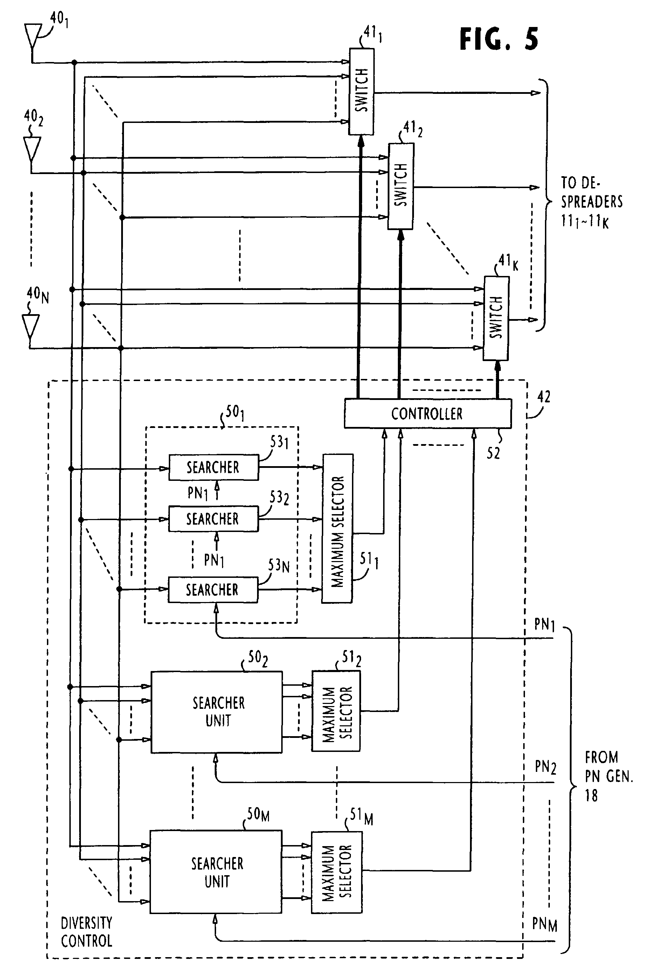

As shown in detail in Fig. 5, the diversity controller 42 includes a plurality of searcher units 50₁ ∼ 50_{M} associated respectively with the M users. Each searcher unit comprises searchers 53₁ ∼ 53_{N} identical in structure to the searchers 15 used in Fig. 3. Searcher units 50₁ ∼ 50_{M} are supplied with PN codes PN₁ through PN_{M,} respectively. Searchers 53₁ ∼ 53_{N} of each unit are connected respectively to the antennas 40₁ ∼ 40_{N} to despread the respective antenna signals with the same PN code, so that each searcher unit produces a plurality of outputs each containing a series of multipath components of the signal destined for the user associated with the searcher unit. Maximum selectors 51₁ ∼ 51_{M} are associated respectively with the searcher units 50₁ ∼ 50_{M} to receive the output signals of the searchers of the associated unit.

Each maximum selector makes a search through the despread signals of all antennas and selects one having the multipath component of highest strength and applies all multipath components of the selected signal to a controller 52 in addition to the identity of the selected antenna. All outputs of the maximum selectors 51₁ ∼ 51_{M} are analyzed by the controller 52 and the number of significant multipath components is determined for each user and the selected antenna. Controller 52-individually operates the switches 41₁ ∼ 41_{K} by allocating them to the selected antennas so that each selected antenna is connected through a number of switches 41 to the associated despreaders.

## Claims

1. A spread spectrum receiver comprising:
a plurality of despreaders (11₁∼11_{K});
a plurality of RAKE combiners (13₁ ∼ 13_{M}) associated respectively with multiple users to which a plurality of spread spectrum signals are transmitted respectively; and
allocation circuitry (12₁ ∼ 12_{M}, 15₁ ∼ 15_{M}, 16 ∼ 19) for detecting one or more multipath components of received spread spectrum signals and allocating said plurality of despreaders to said RAKE combiners according to the detected one or more multipath components,
said plurality of despreaders being provided in number that is smaller than a number of said RAKE combiners times a maximum number of possible multipath components of a spread spectrum signal and greater than the number of said RAKE combiners.

2. A spread spectrum receiver as claimed in claim 1, wherein said allocation circuitry is arranged to:
configure said plurality of despreaders into a plurality of groups so that said groups correspond to received spread spectrum signals and each of said groups has one or more despreaders corresponding to the detected one or more multipath components of each of the received spread spectrum signals, and
allocate the despreaders of each group to a corresponding one of said RAKE combiners.

3. A spread spectrum receiver as claimed in claim 1, wherein said allocation circuitry comprises:
a plurality of searchers (15₁∼15_{M}) provided respectively for said multiple users, each of said searchers detecting multipath components of a corresponding one of said spread spectrum signals;
a plurality of selectors (12₁∼12_{M}) connected between said plurality of despreaders (11₁∼11_{K}) and said RAKE combiners (13₁∼13_{M}); and
control circuitry (16∼19) responsive to output signals from said plurality of searchers for configuring said plurality of despreaders into said plurality of groups of despreaders and controlling said selectors so that said groups of despreaders are connected through said selectors to said RAKE combiners.

4. A spread spectrum receiver as claimed in claim 1, wherein said allocation circuitry comprises:
a plurality of searchers (15₁∼15_{M}) provided respectively for said multiple users, each of said searchers detecting multipath components of a received spread spectrum signal;
a plurality of selectors (12₁∼12_{M}) connected between said plurality of despreaders (11₁∼11_{K}) and said RAKE combiners (13₁∼13_{M});
a plurality of comparator circuitry (30₁∼30_{M}, 31₁∼31_{M}) for detecting differences between output signals of said plurality of searchers and output signals of said plurality of selectors; and
control circuitry (16∼19) responsive to the differences detected by said plurality of comparator circuitry for configuring said plurality of despreaders into said plurality of groups of despreaders and controlling said selectors so that said groups of despreaders are connected through said selectors to said RAKE combiners.

5. A spread spectrum receiver as claimed in claim 3 or 4, wherein said control circuitry comprises:
pseudonoise (PN) generation circuitry (18) for producing a plurality of PN code sequences corresponding to said multiple users;
a time data memory (19) for storing delay time values;
a switch (17) for establishing connections from said PN generation circuitry (18) and said time data memory (19) to said plurality of despreaders (11₁∼11_{K}); and
a control processor (16) for controlling said switch (17) and said selectors (12₁∼12_{M}) according to the configured groups of despreaders so that the despreaders of each group are supplied with a corresponding one of said PN code sequences and one or more delay time values stored in said time data memory (19).

6. A spread spectrum receiver as claimed in claim 1, 2, 3, 4 or 5, further comprising:
a plurality of antennas (40₁∼40_{N});
a plurality of switches (41₁∼41_{K}) associated respectively with said plurality of despreaders, each of the switches having a plurality of input terminals connected respectively to said antennas and an output terminal connected to the associated despreader; and
diversity control circuitry (42) for controlling said switches (41₁∼41_{K}) so that one of said antennas is connected through said switches to a corresponding one of said groups of despreaders.

7. A method of sharing a plurality of despreaders (11₁∼11_{K}) among a plurality of RAKE combiners (13₁∼13_{M}) associated respectively with multiple users to which a plurality of spread spectrum signals are transmitted respectively, said plurality of despreaders being provided in number that is smaller than a number of said RAKE combiners times a maximum number of possible multipath components of a spread spectrum signal and greater than the number of said RAKE combiners, the method comprising the steps of:
a) receiving a spread spectrum signal;
b) determining a number of received spread spectrum signals;
c) determining a number of multipath components of the signal received by the step (a) and relative strengths of the multipath components;
d) determining whether despreaders are available for allocation to a corresponding one of said RAKE combiners;
e) if despreaders are available, allocating to the corresponding RAKE combiner despreaders corresponding to the number of detected multipath components; and
f) if despreaders are not available, configuring said plurality of despreaders into a plurality of groups corresponding to the number of received spread spectrum signals determined by the step (b) according to the number of multipath components of each of the received spread spectrum signals and the relative strengths of the multipath components of each received spread spectrum signal determined by the step (c), and allocating to said RAKE combiners despreaders according to the configured groups.
